# EUROPEAN PATENT APPLICATION

(11) **EP 1 930 179 A1**
(43) Date of publication of application: **11.06.2008**
(21) Application number: 07122321.8
(22) Date of filing: 04.12.2007
(51) Int. Cl.: B44C 1/17, B44C 1/14, B32B 37/12, B32B 15/08

(54) **Decoration for interior furnishing components, and relative production method**

(30) Priority: 05.12.2006 IT BO20060833
(71) Applicant: Giusto Manetti Battiloro, 50144 Firenze (IT)
(72) Inventor: Manetti, Bernardo, 50041 Calenzano (IT)
(74) Representative: Jorio, Paolo

(57) **Abstract**

A decoration (1; 11) for application to interior furnishing components, and having, in succession, a backing layer (2), a heat-melt adhesive layer (3), a decorative layer (4), and a protective varnish layer (5). The method of producing the decoration (1; 11) includes an application step (F1), in which a decorative layer (4) is applied to a backing layer (2) with the interposition of a heat-melt adhesive layer (3); a fixing step (F2), in which pressure and heat are applied to the decorative layer (4) to activate the heat-melt adhesive layer (3) and fix the decorative layer (4) to the backing layer (2); a peeling step (F3), in which a polymer layer (13), used to transport the decorative layer (4), is removed from the opposite surface of the decorative layer (4) to the backing layer (2); and a protection step (F4), in which a varnish layer (5) is applied to the decorative layer (4).

## Description

The present invention relates to a decoration for interior furnishing components, and relative production method.

Interior furnishing components (frames, panels, wallpaper, furniture, wood, leather, granite, marble, etc.) are decorated using various techniques, e.g. water-or solvent-based paint; natural, printed paper, artificial (printed decorative plastic) or metal veneers; or direct solvent- or water-based or laser printing. All these techniques pose problems: the high cost of natural veneer, and the time and skill demanded of the others.

It is an object of the present invention to provide decorations for application to interior furnishing components, and which are both cheap and easy to apply.

According to the present invention, there is provided a decoration for application to interior furnishing components, and comprising, in succession, a backing layer made of paper or a polymer material in the group comprising PET-G, polymethyl acrylate, polycarbonate, PVC, polyurethane; a heat-melt adhesive layer; and a decorative layer.

It is a further object of the present invention to provide a method of producing a decoration for application to interior furnishing components; said method being characterized by comprising, in succession, an application step, in which a decorative layer is applied to a backing layer with the interposition of a heat-melt adhesive layer; a fixing step, in which pressure and heat are applied to said decorative layer to activate the heat-melt adhesive layer and fix the decorative layer to the backing layer; a peeling step, in which a polymer layer, used to transport the decorative layer, is removed from the opposite surface of the decorative layer to the backing layer; and a protection step, in which a varnish layer is applied to the decorative layer.

A non-limiting embodiment of the invention will be described by way of example with reference to the accompanying drawings, in which:
Figure 1 shows a section of the decoration according to the present invention;
Figure 2 shows a section of a second embodiment of the decoration;
Figure 3 shows the Figure 1 decoration in the making.

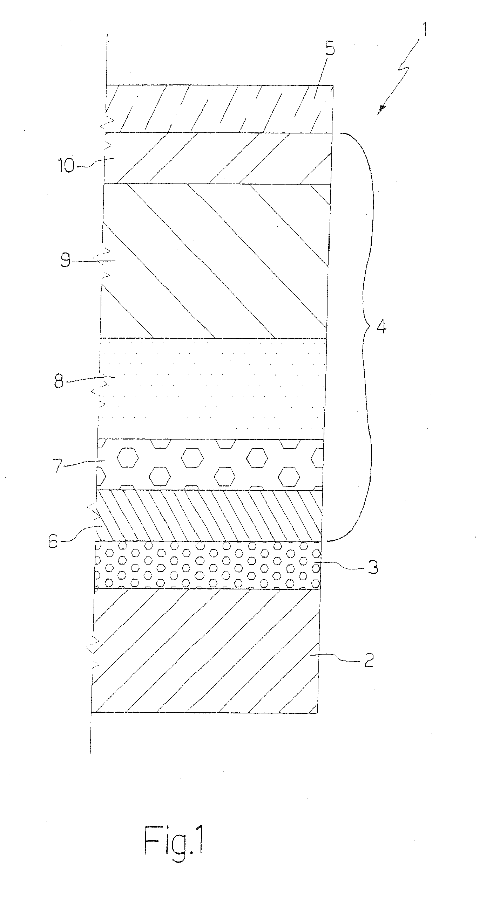

Number 1 in Figure 1 indicates as a whole the decoration according to the present invention.

Decoration 1 comprises a backing layer 2 made of paper or a polymer material in the group comprising PET-G, polymethyl acrylate, polycarbonate, PVC, polyurethane; a heat-melt adhesive layer 3; a decorative layer 4; and a varnish layer 5. Decorative layer 4 comprises an adhesive layer 6; a metal/adhesive connecting layer 7; a metalized layer 8 formed by sublimation to give a metallic effect; a decoration layer 9 formed using pigments and/or lacquer using known techniques; and a surface layer 10 for enabling removal of a polymer cover layer used to transport decorative layer 4.

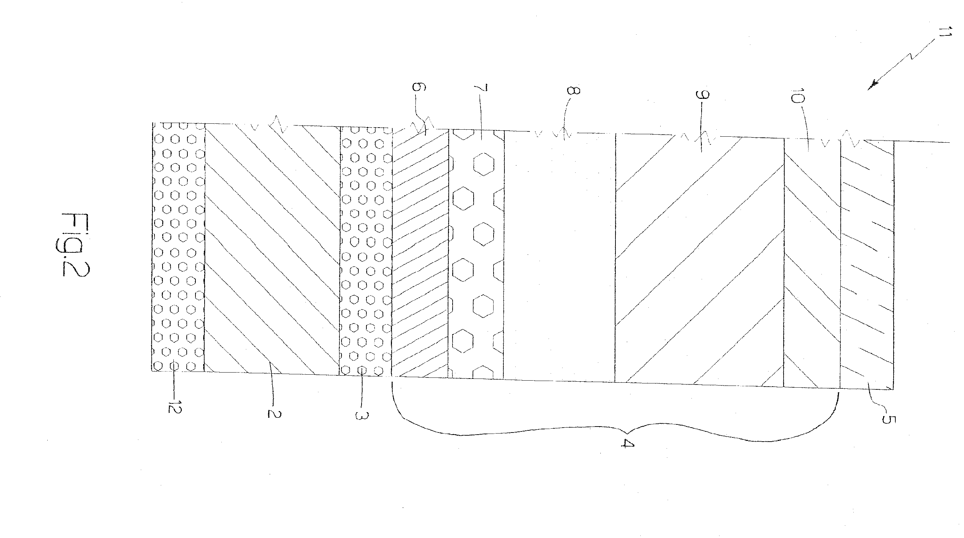

Figure 2 shows a second embodiment 11 of the decoration according to the present invention, in which parts identical to those of decoration 1 are indicated using the same reference numbers with no further description. Decoration 11 differs from decoration 1 by comprising a further heat-melt adhesive layer 12 on the opposite side of backing layer 2 to adhesive layer 3, and which provides for fixing decoration 11 to the selected interior furnishing component.

Adhesive layers 3 and 12 are defined by a material in the group comprising vinyl-based heat seal lacquer, acrylic-based heat seal lacquer, and polyurethane-based heat seal lacquer.

Varnish layer 5 is a material in the group comprising UV cross-linking acrylic paints; bicomponent acrylic-based paints; UV cross-linking polyester paints; nitrocellulose monocomponent paints; and acrylic-polyurethane paints.

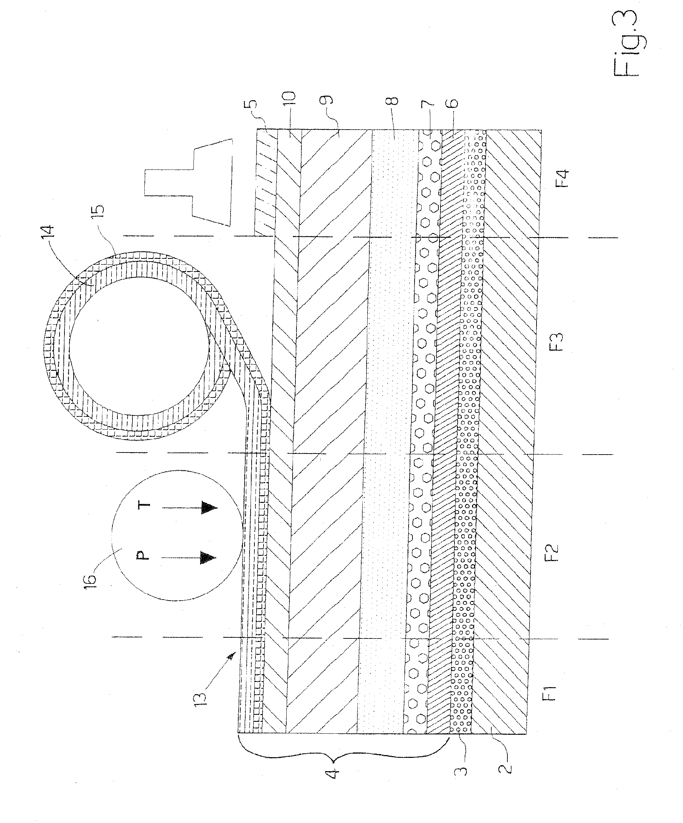

Figure 3 shows decoration 1 in the making.

The method of producing decoration 1 comprises an application step F1, in which decorative layer 4, including a polymer cover layer 13, is applied to backing layer 2, with the interposition of adhesive layer 3. Following application step F1, the method comprises a fixing step F2, in which a heated calender 16, shown schematically in the drawing, applies pressure and heat on the polymer cover layer 13 to activate adhesive layer 3 and so fix decorative layer 4 to backing layer 2. Following fixing step F2, the method comprises a peeling step F3, in which polymer cover layer 13 is removed; and a protection step F4, in which varnish layer 5 is applied to decorative layer 4.

More specifically, polymer cover layer 13 comprises a polyester layer 14 and a peel-off layer 15.

Backing layer 2 and adhesive layer 3 may either also be joined at application step F1, or form a one-piece product used and marketed as such.

The method of producing decoration 11 is the same as described above, except for the addition of a further step to apply the further heat-melt adhesive layer.

As will be clear from the above description, the present invention provides for decorating surfaces quickly and easily, by simply applying the decoration according to the present invention - which incorporates the metalized decorated surface - to the selected surface.

A major advantage of this solution is that, unlike direct on-surface decorating and metalizing techniques, the same decoration can be applied to a wide range of interior furnishing components, with no limit to the feasibility of the surfaces for decorating.

## Claims

1. A decoration (1; 11) for application to interior furnishing components, and comprising, in succession, a backing layer (2) made of paper or a polymer material in the group comprising PET-G, polymethyl acrylate, polycarbonate, PVC, polyurethane; a heat-melt adhesive layer (3); and a decorative layer (4).

2. A decoration as claimed in Claim 1, **characterized by** comprising a protective varnish layer (5) on top of said decorative layer.

3. A decoration as claimed in Claim 1 or 2, **characterized by** comprising a further heat-melt adhesive layer (12) located on said backing layer (2), and which, during application, is placed in contact with the interior furnishing component to which the decoration is applied.

4. A decoration as claimed in Claim 3, **characterized in that** the heat-melt adhesive layers (3, 12) are made of a material in the group comprising vinyl-based heat seal lacquer, acrylic-based heat seal lacquer, and polyurethane-based heat seal lacquer.

5. A decoration as claimed in Claim 3 or 4, **characterized in that** the varnish layer (5) is a material in the group comprising UV cross-linking acrylic paints, bicomponent acrylic-based paints, UV cross-linking polyester paints, nitrocellulose monocomponent paints, and acrylic-polyurethane paints.

6. A decoration as claimed in any one of the foregoing Claims, **characterized in that** the decorative layer (4) comprises an adhesive layer (6); a metal/adhesive connecting layer (7); a metalized layer (8) formed by sublimation to give a metallic effect; and a decoration layer (9) formed using pigments and/or lacquer.

7. A method of producing a decoration (1; 11) for application to interior furnishing components; said method being **characterized by** comprising, in succession, an application step (F1), in which a decorative layer (4) is applied to a backing layer (2) with the interposition of a heat-melt adhesive layer (3); a fixing step (F2), in which pressure and heat are applied to said decorative layer (4) to activate the heat-melt adhesive layer (3) and fix the decorative layer (4) to the backing layer (2); a peeling step (F3), in which a polymer layer (13), used to transport the decorative layer (4), is removed from the opposite surface of the decorative layer (4) to the backing layer (2); and a protection step (F4), in which a varnish layer (5) is applied to the decorative layer (4) .

8. A method as claimed in Claim 7, **characterized in that** the backing layer (2) and the heat-melt adhesive layer (3) form a one-piece product usable as such.

9. A method as claimed in Claim 7 or 8, **characterized in that** said fixing step (F2) is performed using a heated calender (16).

10. An interior furnishing component, **characterized by** comprising a decoration as claimed in one of Claims 1 to 6.
